# EUROPEAN PATENT SPECIFICATION

(11) **EP 0 467 717 B1**
(45) Date of publication and mention of the grant of the patent: **14.01.1998**
(21) Application number: 91306624.7
(22) Date of filing: 19.07.1991
(51) Int. Cl.: H04N 5/92, H04N 5/907, H04N 7/24, H04N 7/30

(54) **Data shuffling apparatus**
Datenmischendes Gerät
Dispositif mélangeur de données

(30) Priority: 20.07.1990 JP 193621/90; 20.02.1991 JP 26116/91
(43) Date of publication of application: 22.01.1992
(73) Proprietor: MATSUSHITA ELECTRIC INDUSTRIAL CO., LTD., Kadoma-shi, Osaka-fu 571 (JP)
(72) Inventor: Juri, Tatsuro, Miyakojima-ku, Osaka-fu 534 (JP); Matsumi, Chiyoko, Suita-shi, Osaka-fu 565 (JP); Kashiro, Takao, Moriguchi-shi, Osaka-fu 570 (JP)
(74) Representative: Crawford, Andrew Birkby

(56) References cited:
- EP-A- 0 060 095
- EP-A- 0 125 840
- PATENT ABSTRACTS OF JAPAN vol. 13, no. 354 (E-802)8 August 1989 & JP-A-11 142 277
- PATENT ABSTRACTS OF JAPAN vol. 13, no. 5 (E-701)9 January 1989 & JP-A-63 215 278
- PATENT ABSTRACTS OF JAPAN vol. 13, no. 5 (E-701)9 January 1989 & JP-A-63 215 279
- SMPTE JOURNAL vol. 95, no. 10, October 1986, WHITE PLAINS, US pages 1009 - 1016 RICHARD BRUSH 'Video Data Shuffling for the 4:2:2 DVTR'

## Description

### BACKGROUND OF THE INVENTION

### 1. Field of the Invention

The present invention relates to a data shuffling apparatus used in recording or transmission of video information after high efficiency encoding.

### 2. Description of the Prior Art

Video information is tremendous in the data quantity, and it is often transmitted or recorded after high efficiency encoding in order to curtail the data quantity. High efficiency encoding is means for compressing the data quantity by removing the redundant portions of the video information. As the method of high efficiency encoding, it is known, for example, to divide the input sample values first into blocks composed of adjacent plural pixels, and orthogonally transform in every block, and encode in every orthogonal transformation. In the case of such block unit coding, first the input video data must be shuffled, or rearranged into the sequence of blocks suited to encoding. In particular, to enhance the efficiency of high efficiency encoding or disperse the effects of an error, it is important to shuffle the blocks (see the Japanese Patent Application No. 63-271178).

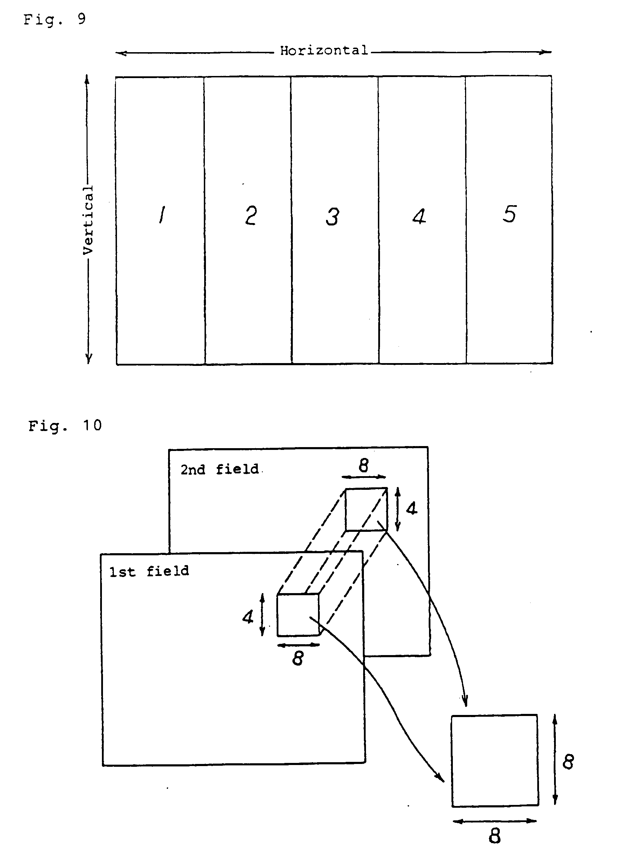

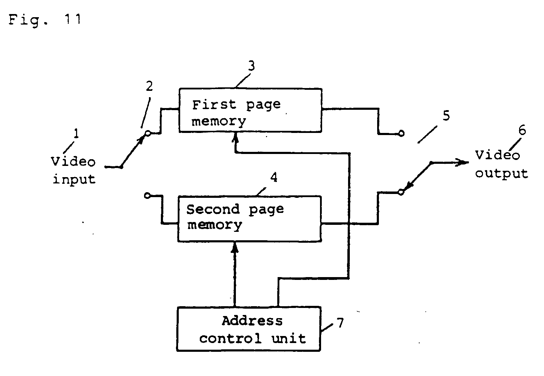

Here is explained an example of gathering two fields (= 1 frame) of TV signals to make up one page, and composing one block in the unit of two fields. Fig. 10 is an explanatory diagram of a block of this prior art. As shown in Fig. 10, this block is composed of a total of 64 pixels consisting of horizontal 8 pixels adjacent on the screen, vertical 4 lines, and two fields in the time axis direction. A conventional shuffling apparatus is shown in Fig. 11.

In Fig. 11, numeral 1 is a video input unit, 2 is an input switch, 3 is a first page memory, 4 is a second page memory, 5 is an output switch, 6 is a video output unit, and 7 is an address control unit. A TV signal is first entered from the top line of the first field sequentially line after line, and after all lines of the first field are filled up, the input into the second field is started. Accordingly, in Fig. 11, the video data entered from the video input unit 1 is put into the first page memory 3 by the input switch 2. At the same time, the video data of the previous page recorded in the second page memory 4 is shuffled, and delivered into the video output unit 6 through the output switch 5. Meanwhile, the input and output addresses of these two page memories are controlled in the address control unit 7, and are rearranged into the blocks as shown in Fig. 10. In this way, when input and output of the image data for one page is over, the input switch 2 and output switch 5 are changed over, and the same processing as the previous page is conducted, using the first page memory as the output memory and the second page memory as the input memory. Thereafter, in every page, while changing over the input and output memories, by rearranging, the continuously entered moving picture can be shuffled.

In the prior art, however, shuffling of data in two fields (one page) requires video memories for four fields (two pages). Since the video information is very large in data quantity, a large memory is required for shuffling, which resulted in increase of memory cost and power consumption.

JP-A-1,114,277 discloses a data shuffling apparatus of this type, provided with two memories for storing two pages of data, and a memory changeover switch for alternately selecting one of the two memories to be the input memory, and one to be the output memory.

EP-A-0,125,840 discloses a data shuffling apparatus which is designed to shuffle data in a field before storage to distribute proximal parts of the picture over distal regions of the storage medium, so that errors occurring on the storage medium are distributed evenly and less obviously across the reproduced image. The apparatus disclosed suffers from the same disadvantage as the apparatus disclosed in Fig. 11, in that either enough memory for two frames must be supplied, or the reading in and reading out from the memory cannot occur simultaneously.

It is hence a primary object of the invention to present a data shuffling apparatus capable of realizing shuffling of data of one page by a memory of about one page, by controlling the addresses to the page memory.

To achieve the above object, the invention presents a data shuffling apparatus for shuffling data in each of a plurality of pages of data, each of the plurality of pages being composed of a plurality of blocks of data, said apparatus comprising:
a data memory having a storage capacity to hold a page of data for temporarily storing data; and
data address generating means coupled to the data memory for generating a sequence of addresses of the data memory so that the data in the current page are written into the data memory in a first sequence and the written data are read out from the data memory in a second sequence which is different from the first sequence to thereby shuffle the data in the current page,
characterized in that the data memory operates such that data in a block in the current page is read from a portion of the data memory indicated by a current address generated by the address generating means, and data in a block in a next page is thereafter written into the same portion of the data memory during a time said portion is addressed by the current address generating means, and
that the data address generating means changes the sequence of the addresses of the data memory on a page by page basis.

### BRIEF DESCRIPTION OF THE DRAWINGS

Fig. 1 is a block diagram of a first embodiment of the invention;
Fig. 2 is an execution diagram for data an address generating unit of the first embodiment of the invention when generating addresses for input of page n to data memory;
Fig. 3 is an execution diagram of the data address generating unit of Fig. 2 when generating addresses for input of page n+1 to data memory;
Fig. 4 is a block diagram of a second embodiment of the invention;
Fig.5 is a block diagram of a third embodiment of the invention;
Fig. 6 is a block diagram of a fourth embodiment of the invention;
Fig. 7 is a diagram illustrating the constitution of an input address generating unit of the fourth embodiment;
Fig. 8 is a block diagram of a fifth embodiment of the invention;
Fig. 9 is an explanatory diagram of division of one page of video information according to the fifth embodiment of the invention;
Fig. 10 is an explanatory diagram of block forming in the prior art; and
Fig. 11 is a block diagram of a shuffling apparatus of the prior art.

### DESCRIPTION OF THE PREFERRED EMBODIMENTS

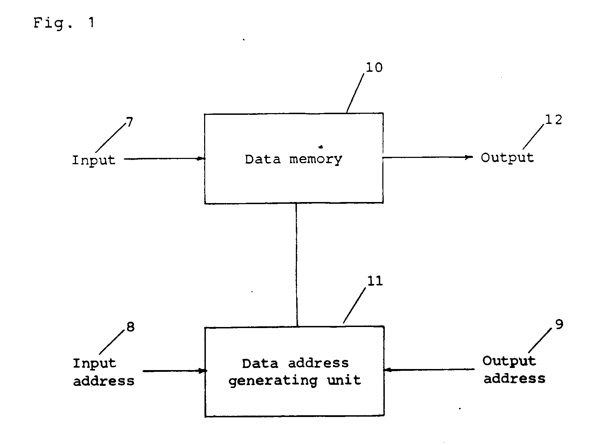

Referring now to the drawings, some of the preferred embodiments of the invention are described below. Fig. 1 is a block diagram of a first embodiment of the invention. In Fig. 1, numeral 7 is a data input unit, 8 is an input address unit, 9 is an output address unit, 10 is a data memory, 11 is a data addressing generating unit, and 12 is a data output unit. This embodiment is a data shuffling apparatus for shuffling video signals in which one page is composed of two fields. The input and output addresses obtained from the input address unit 8 and output address unit 9 are fed into the data address generating unit 11, and are converted into an address for the data memory. The data recorded in the recording portion indicated by the address delivered from the data address generating unit 11 is delivered to the output unit 12. At the same time, the data in block unit entered from the input unit 7 is recorded in the recording portion indicated by the address delivered from the data address generating unit 11.

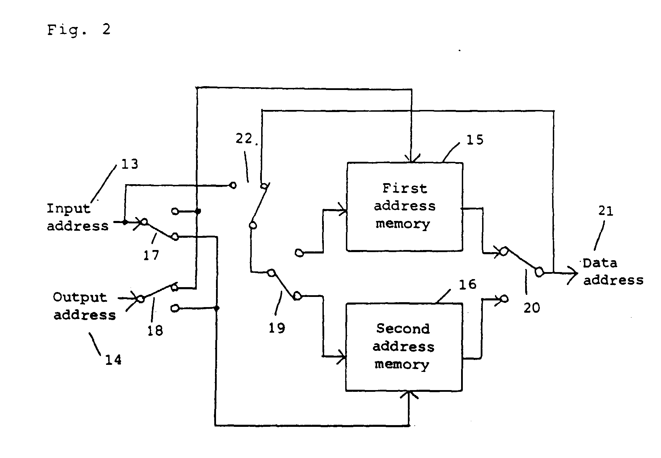

Fig. 2 is an execution diagram of the data address generating unit 11 in Fig. 1. In Fig. 2, numeral 13 is an input address unit, same as 10 in Fig. 1, 14 is an output address unit, same as 11 in Fig. 1, 15 is a first address memory, 16 is a second address memory, 17 to 20 and 22 are switches, and 21 is a data address output unit.

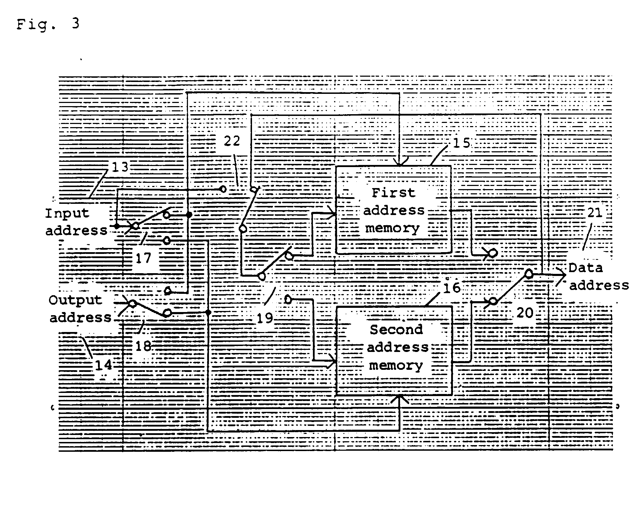

Suppose, in the first place, the address corresponding to the data memory at the time of input of the data of page n-1 into the data memory is recorded in the first address memory. The input address unit 13 is connected to the address of the second address memory by the switch 17, the output address unit 14 to the address of the first address memory by the switch 18, and the data address output unit 21 to the output of the first address memory and the input of the second address memory by the switches 19 and 20. The data address thus recorded in the first address memory is read out according to the output address entered from the output address unit 14, and is delivered to the address output unit 21 as the address corresponding to the data memory for entering page n. The address delivered from the address output unit 21 becomes the input address corresponding to the data of page n, and simultaneously becomes the output address of the data of page n-1. At the same time, the address of the data memory corresponding to the input of page n is recorded in the second address memory 16 according to the input address entered from the input address unit 13. In this way, all addresses of the data memory corresponding to page n are delivered, and then the switches are inverted, and the addresses corresponding to page n+1 are similarly delivered from the second address memory. Fig. 3 shows a connection example of the switches 17 to 20 corresponding to page n+1. In the data address generating unit of the invention, by repeating such operation in every frame, the input and output addresses of the data memory corresponding to each page can be generated. Incidentally, the switch 22 in Fig. 2 and Fig. 3 is used when the input address 13 is employed as the initial value of the content of the address memory, at the time of reset such as turning on the power. By utilizing the invention in this way, the data addresses of the output data and input data may be equalized, so that the size of the data memory may be reduced to 1/2 of the conventional memory.

A second embodiment is explained, in which a part of the input data is not utilized. Generally, the video information contains horizontal blanking and vertical blanking in every field, and such portions are not usually transmitted in high efficiency encoding. Therefore, the capacity of the memory may be saved by not recording such redundant portions in the data memory. In the first embodiment, however, since the data input timing and output timing are identical, it is necessary to synchronize the timing of the redundant portion of the input side and the timing of the redundant portion of the output side.

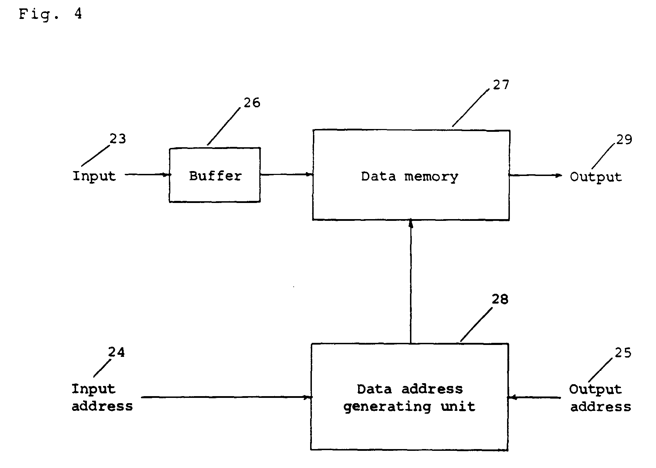

Fig. 4 is a block diagram of the embodiment for matching the timings of redundant parts of input and output. In Fig. 4, numeral 23 is an input unit, 24 is an input address unit, 25 is an output address unit, 26 is a buffer, 27 is a data memory, 28 is a data address generating unit, and 29 is an output unit. The difference between this embodiment and the embodiment explained in Fig. 1 is that the buffer 26 is placed between the input unit 23 and the data memory 27. The data entered from the input unit 23 is first recorded in the buffer 26, and is fed into the data memory 27 by matching with the timing of the data delivered to the output unit 29. Thus, by matching the input and output timings by using the buffer 26, this invention may be applied even if the input and output are different in timing. In the embodiment in Fig. 4, meanwhile, the buffer is disposed at the input side of the data memory, but it is also possible to install the buffer at the output side of the data memory.

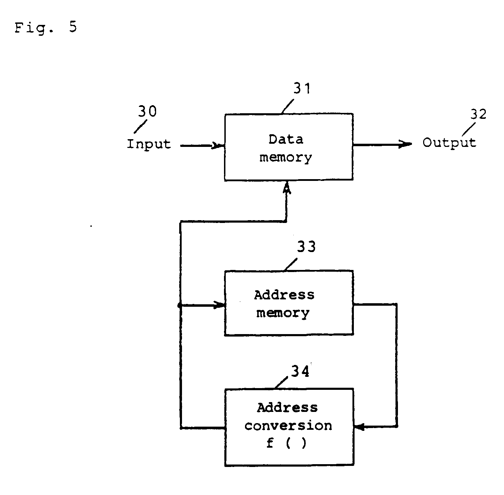

A third embodiment is explained by referring to the block diagram in Fig. 5. In Fig. 5, numeral 30 is a data input unit, 31 is a data memory for one page portion, 32 is a data output unit, 33 is an address memory, and 34 is an address converting unit. The video data of page n-1 recorded in the data memory 31 delivers the data recorded in the position shown by the address generated by the address converting unit 34 from the data output unit 32. After the output of the data at this address, the video data of page n entered from the data input unit 30 is entered in the same address. At the same time, the input and output addresses of the data memory 31 delivered from the address converting unit 34 are recorded in the address memory 33.

The operation of the apparatus in Fig. 5 is described below. To simplify the explanation, it is supposed that the video data entering this shuffling apparatus is composed of horizontal 8 pixels and vertical 4 lines in one field, and is rearranged into a block of 64 pixels by gathering together the video data in two fields as shown in Fig. 10. Therefore, the line numbers of the input video data and the line numbers of the output video data are expressed in the sequence as shown in Table 1. The input line numbers 0 to 3 in Table 1 denote the first field, and 4 to 7, the second field. When the input and output sequences are controlled in this sequence shown in the table, a block of 64 pixels composed of two fields is made up. More specifically, when the input address of a certain page corresponding to the data memory is equal to the input line number of Table 1, the output address of that page may be generated by matching with the sequence of the output line numbers in Table 1. In Table 1, supposing the i-th input address of a certain page is Ai, the output address Bi to be delivered by the i-th time of that page is expressed in the following function f ( ):$\text{Bi = f (Ai) = 4 x Ai - p x 7}$ where p is a maximum integer as far as Bi is not a negative number.

**Table 1**

| Input, output sequence | Input line number | Output line number |
|---|---|---|
| 0 | 0 | 0 |
| 1 | 1 | 4 |
| 2 | 2 | 1 |
| 3 | 3 | 5 |
| 4 | 4 | 2 |
| 5 | 5 | 6 |
| 6 | 6 | 3 |
| 7 | 7 | 7 |

The address converting unit 34 in Fig. 5 generates, by using this function f ( ), the output address of page n-1 (that is, the input address of page n) from the input address of page n-1. In this embodiment, therefore, the output address of page n-1 of the data memory and the input address of page n are equal to each other. This input, output address is delayed for the portion of one page, and the input, output address of the next page is led out in the address converting unit 34. As a result, the input, output address for each page may be easily generated. Besides, the data memory necessary for this embodiment is enough with a memory for one page portion, and the video memory capacity may be reduced to 1/2 of the prior art in Fig. 11. Incidentally, the number of lines and number of pixels used in the explanation of this embodiment may be freely variable, and the address control in other than line unit is also possible. At the same time, the above function may be variously applied, and the address converting unit may be realized, for example, by a ROM table or the like.

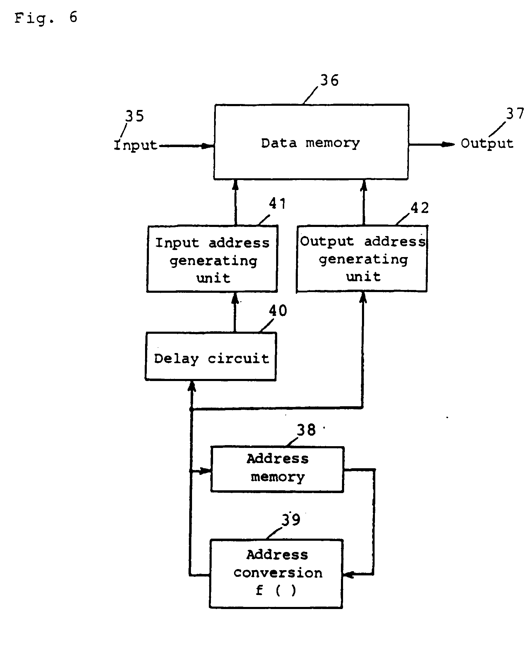

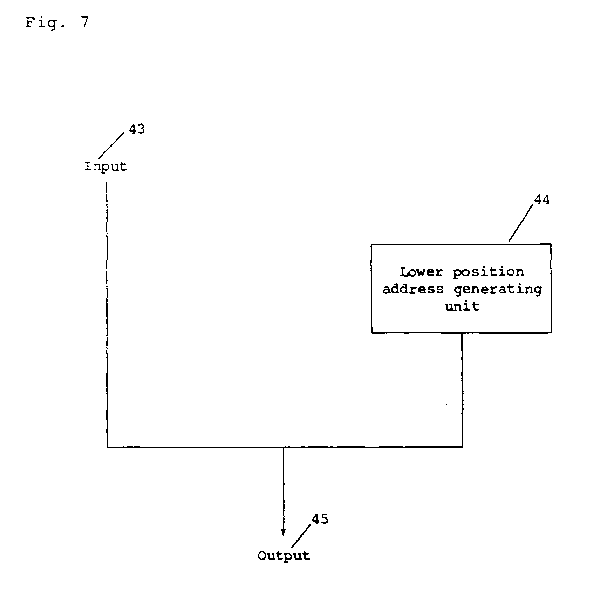

A fourth embodiment is shown in Fig. 6. In Fig. 6, numeral 35 is a data input unit, 36 is a data memory for one page, 37 is a data output unit, 38 is an address memory, 39 is an address converting unit, 40 is a delay circuit for delaying the address for a specific time, 41 is an input address generating unit, and 42 is an output address generating unit. The video data entered from the data input unit 35 is recorded in the data memory according to the input address generated by the input address generating unit 41. The output of the data memory 36 is delivered to the data output unit 37 according to the output address generated by the output address generating unit 42. Fig. 7 shows the constitution of the input address generating unit 41 and output address generating unit 42. In Fig. 7, numeral 43 denotes an upper position address input unit from the delay circuit 40 or address converting unit 39 in Fig. 6, 44 is a lower position address generating unit, and 45 is an address output unit. The upper position address entered from the input unit 43 is delivered from the output unit 45 together with the lower position address generated in the lower position address generating unit 44. The upper position address in this embodiment represents the address in block unit, while the lower position address is the address for rearranging the data in the block. Accordingly, when the address in the block unit (upper position address) differs, the lower position addresses in the input address generating unit 41 and output address generating unit 42 in Fig. 6 may be generated quite independently. The upper position address of the input and output address is generated by using the address memory 38 and address converting unit 39 same as in the embodiment in Fig. 5. The upper position address of the input address of page n-1 delivered from the address memory 38 is converted into the upper position address of the input address corresponding to page n (that is, the upper position address of the output address corresponding to page n-1) in the address converting unit 39. The upper position address obtained here is entered into the delay circuit 40 and output address generating unit 42. The upper position address entered in the delay circuit 40 is delayed for a specific time, and is entered into the input address generating unit 41. By this time delay, different addresses are entered in the upper position address to be entered in the input address generating unit 41 and the upper position address entered into the output address generating unit 42, and always the upper position address entered in the output address generating unit 42 is ahead. Therefore, the input address delivered from the input address generating unit 41 is always different from the output address delivered from the output address generating unit 42. In this embodiment, thus, the data in the page unit can be shuffled by the data memory for one page only. In this embodiment, different from the embodiment in Fig. 5, since the input and output addresses can be generated independently, a freer rearranging manner is possible. For example, the lower position address of the input address can generate addresses in every line by matching with the data input, while the lower position address of the output address can generate addresses in every horizontal 8 pixels, vertical 4 lines by matching with the data output. Furthermore, in this embodiment, since only the upper portion of the input and output address is generated by using the address memory, the capacity of the address memory may be saved. In this embodiment, moreover, the timing of the data output is ahead of the timing of the data input for the portion of delay time by the delay circuit 40. In actual TV signal, however, a specific blanking period is present at the end of one page. Accordingly, by advancing the data output by making use of this blanking period, it is possible to start output after the input of the previous page is all over.

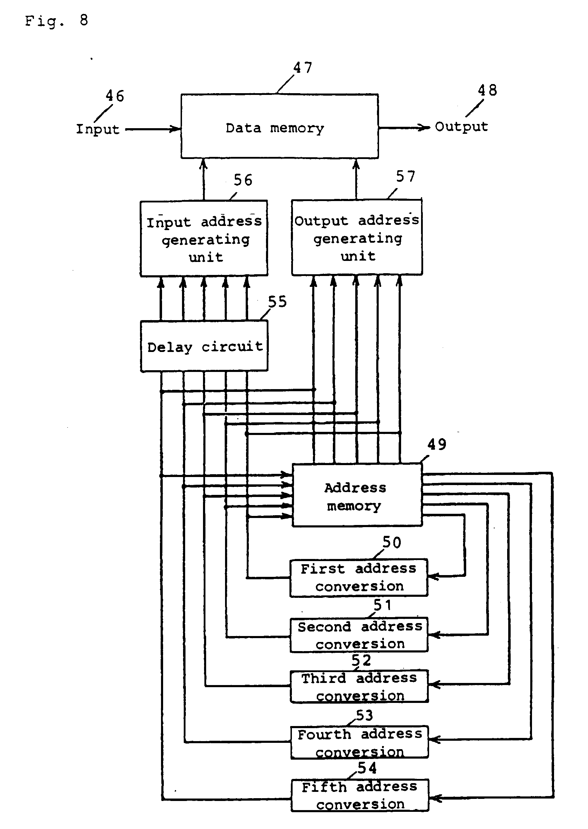

Referring now to Fig. 8, a fifth embodiment is explained below. In Fig. 8, numeral 46 is a data input unit, 47 is a data memory for one page, 48 is a data output unit, 49 is an address memory, 50 is a first address converting unit, 51 is a second address converting unit, 52 is a third address converting unit, 53 is a fourth address converting unit, 54 is a fifth address converting unit, 55 is a delay circuit for delaying the address for a specific time, 56 is an input address generating unit, and 57 is an output address generating unit. The video data entered from the data input unit 46 is recorded in the data memory according to the input address generated by the input address generating unit 56. The output of the data memory 47 is delivered to the data output unit 48 according to the output address generated by the output address generating unit 57. Of these input and output addresses, the lower position addresses are generated inside the input address generating unit 56 and output address generating unit 57 as shown in Fig. 7. By contrast, the upper position addresses of the input, and output addresses are generated, same as in the embodiment in Fig. 6, in a total of five (k = 5) address converting units of the first address converting unit 50 to fifth address converting unit 54, as well as in the address memory 49. In this embodiment, the video information of one page is divided into five parts in the horizontal direction as shown in Fig. 9, and is rearranged differently in block unit in each part. Therefore, the upper position address of the input address of the previous page delivered from the address memory 49 is a first classified into five groups, and depending on which region in Fig. 9 each group belongs to, the address converting means is selected out of the first address converting unit 50 to the fifth address converting unit 54. The upper position address converted by the selected address converting means is entered into the delay circuit 55 and output address generating unit 57. The upper position address entered into the delay circuit 55 is delayed for a specific time, and is fed into the input address generating unit 56. As a result, the input address delivered from the input address generating unit 56 is always different from the output address delivered from the output address generating unit 57, it is moreover possible to generate the position already after the output by the output address. By contrast to the embodiment in Fig. 6, the embodiment in Fig. 8 is advanced in the degree of freedom of shuffling the data. In this embodiment, as shown in Fig. 9, since one page is divided into five parts and reassembled, it is suited to improvement of efficiency of high efficiency encoding, and shuffling process for dispersing the effect of transmission route error. Meanwhile, the method of dividing one page and the number of divisions (k) are arbitrary.

The invention is explained herein by referring to five embodiments, but the constitution of the invention may be realized also in other various manners. In the fourth and fifth embodiments, the input and output addresses to the data memory are independently. By making use of this property, in the input signal having jitter in the household VTR or the like, the input clock of the data memory can be synchronized with the input signal, and the output clock may be synchronized with the subsequent signal processing clock, so that the input jitter can be removed. Or by controlling the data address generating unit of the invention, it is also possible to realize special reproduction such as still picture, slow and strobe display.

Incidentally, in the foregoing embodiments of the invention, the use in encoding is explained, but the invention may be similarly applied to decoding. Or, one page issupposed to be composed of two fields, but one page may be composed in the unit of various data quantities, and it may be also applied to shuffling of other data than video signal.

In thus constituted invention, the addresses to the input video data are assigned to the addresses of the already delivered video data. Accordingly, shuffling of one page can be realized by the data memory for the portion of one page, so that the moving picture may be shuffled in the memory capacity of 1/2 of the prior art. Besides, the input and output addresses of each page may be easily generated by using the addresses of the previous page recorded in the address memory. As a result, by a relatively simple control, the circuit scale and power consumption may be greatly reduced. Furthermore, the invention may be also applied in removal of jitter from the input signal.

## Claims

1. A data shuffling apparatus for shuffling data in each of a plurality of pages of data, each of the plurality of pages being composed of a plurality of blocks of data, said apparatus comprising:
a data memory (10; 27; 31; 35; 47) having a storage capacity to hold a page of data for temporarily storing data; and
data address generating means (11; 28) coupled to the data memory for generating a sequence of addresses of the data memory so that the data in the current page are written into the data memory in a first sequence and the written data are read out from the data memory in a second sequence which is different from the first sequence to thereby shuffle the data in the current page,
characterized in that the data memory (10; 27; 31; 35; 47) operates such that data in a block in the current page is read from a portion of the data memory indicated by a current address generated by the address generating means, and data in a block in a next page is thereafter written into the same portion of the data memory during a time said portion is addressed by the current address generated by the data address generating means, and
that the data address generating means (11; 28) changes the sequence of the addresses of the data memory on a page by page basis.

2. An apparatus according to claim 1, wherein the data address generating means (11; 28) includes an address memory (33; 38; 49) for recording therein the addresses of the data memory corresponding to the current page, and an address converting means (34; 39) coupled to the address memory for converting an address read from a portion of the address memory by a predetermined conversion function and applying the converted address to the data memory and the address memory, wherein the address memory stores the converted address to the same portion of the address memory from which the address is read.

3. An apparatus according to claim 1, further comprising buffer means (26; 40; 55) for matching timings of data inputted to the data memory and data outputted from the data memory.

4. An apparatus according to claim 1, wherein the data address generating means comprises:
an address memory (33;38;49) for recording therein addresses of the data memory such that an address Bi indicating an area of the data memory from which a block of data written therein has been read out is recorded into an address i of the address memory, the address Bi recorded in the address i of the address memory being applied to the data memory for writing an i-th input block of data in the current page into the area of the data memory indicated by the address Bi; and
address converting means (34;39) coupled to the address memory for converting the address Bi outputted from the address memory to an address Ai which is expressed by Ai=f(Bi), where f( ) denotes a predetermined conversion function of Bi, the address Ai being applied to the data memory (31;36) for reading out a block of data written into an area of the data memory indicated by the address Ai as an i-th output block of data in the current page.

5. An apparatus according to claim 1, wherein the address is composed of an upper position address indicating an area for one block of data and a lower position address indicating a portion for each data in the block within the area, and
wherein the data address generating means comprises:
lower position address generating means (44) for generating the lower position address;
an address memory (38) for recording therein upper position addresses of the data memory such that an address Bi indicating an area of the data memory (36) from which a block of data written therein has been read out is recorded into an address i of the address memory being applied together with the lower position address generated by the lower position address generating means (44) to the data memory for writing an i-th input block of data in the current page into the area of the data memory indicated by the address Bi; and
address converting means coupled to the address memory (38) for converting the address Bi outputted from the address memory to an address Ai which is expressed by Ai=f(Bi), where f( ) denotes a predetermined conversion function of Bi, the address Ai being applied together with the lower position address generated by the lower position address generating means (44) to the data memory (56) for reading out a block of data written into a portion of the data memory indicated by the address Ai as an i-th output block of data in the current page.

6. An apparatus according to claim 1, wherein the plurality of blocks in the current page are classified into a plurality of groups of blocks,
wherein the data address generating means generates an address of the data memory (47) so that the data in each of the plurality of groups of blocks in the current page are written into the data memory in a first sequence and the written data are read out from the data memory in a second sequence which is different from the first sequence to thereby shuffle the data in each of the plurality of groups of blocks in the current page,
wherein the data address generating means comprises:
an address memory (49) for recording therein addresses of the data memory such that an address Bi indicating an area of the data memory from which a block of data written therein has been read out is recorded into an address i of the address memory, the address Bi recorded in the address i of the address memory being applied to the data memory (47) for writing an i-th input block of data in the current page into the area of the data memory indicated by the address Bi; and
a plurality of address converting means (50-54) each being coupled to the address memory for converting the address Bi outputted from the address memory, wherein, when the i-th input block of the data in the current page belongs to a j-th group of blocks among the plurality of groups of blocks of data, a j-th address converting means converts the address Ai which is expressed by Ai=fj(Bi), where fj( ) denotes a predetermined conversion function of Bi which is dependent on the j-th group of blocks, the address Ai being applied to the data memory (47) for reading out a block of data written into an area of the data memory indicated by the address Ai as an i-th output block of data in the current page.

7. An apparatus according to claim 1, wherein the plurality of blocks in the current page are classified into a plurality of groups of blocks,
wherein the data address generating means generates an address of the data memory (47) so that the data in each of the plurality of groups of blocks in the current page are written into the data memory (47) in a first sequence and the written data are read out from the data memory in a second sequence which is different from the first sequence to thereby shuffle the data in each of the plurality of groups of blocks in the current page,
wherein the address is composed of an upper position address indicating an area for one block of data and a lower position address indicating a portion of each data in the block within the area, and
wherein the data address generating means comprises:
lower position address generating means (44) for generating the lower position address;
an address memory (49) for recording therein upper position addresses of the data memory (47) such that an address Bi indicating an area of the data memory from which a block of data written therein has been read out is recorded into an address i of the address memory, the address Bi recorded in the address i of the address memory being applied together with the lower position address generated by the lower position address generating means (44) to the data memory for writing an i-th input block of data in the current page into the area of the data memory indicated by the address Bi; and
a plurality of address converting means (50-54) each being coupled to the address memory (49) for converting the address Bi outputted from the address memory, wherein, when the i-th input block of data in the current page belongs to a j-th group of blocks among the plurality of groups of blocks of data, a j-th address converting means converts the address Bi outputted from the address memory to an address Ai which is expressed by Ai=fj(Bi), where fj( ) denotes a predetermined conversion function of Bi which is dependent on the j-th group of blocks, the address Ai being applied to the data memory (47) for reading out a block of data written into an area of the data memory indicated by the address Ai as an i-th output block of data in the current page.

8. An apparatus according to claim 1, wherein the data address generating means comprises:
a first address memory (15) for recording therein addresses of the data memory (10) for reading out the data in the current page stored in the data memory, the first address memory being responsive to an externally given read address (13;14) for outputting an address (21) recorded in an area of the first address memory indicated by the externally given read address to the data memory for reading a block of data stored in an area of the data memory indicated by the address memory and then writing a block of data in a next page into the area of the data memory indicated by the address outputted from the first address memory; and
a second address memory (16) for recording therein addresses of the data memory (10) for shuffling the data in the next page, the second address memory being responsive to an externally given write address (13;14) for recording the address outputted from the first address memory into an area of the second address memory (16) indicated by the externally given write address, and
wherein operations of the first and second address memories (15;16) being alternately changed over to each other on page by page basis.

9. An apparatus according to any of claims 1 to 8, wherein each page of the plurality of pages being inputted to the apparatus is preceded by a blanking period, and wherein the data in the current page written in the data memory (10;27,31;36;47) being read out during the blanking period of the next page.

10. An apparatus according to any of claims 1 to 8, wherein the data to be shuffled are data of a video signal, and wherein a timing for writing the data into the data memory (10;27;31;36;47) is synchronized with a clock which is synchronized with the horizontal synchronizing signal of the video signal, and a timing for reading out the written data from the data memory is synchronized with a clock signal of a data processor coupled to the apparatus.

11. An apparatus according to any of claims 1 to 8, wherein the data to be shuffled are data of a video signal, and wherein a timing for writing the data into the data memory (10;27;31;36;47) is synchronized with a clock signal of a data processor coupled to the apparatus, and a timing for reading out the written data from the data memory is synchronized with a clock which is synchronized with the horizontal synchronizing signal of the video signal.

## Patentansprüche

1. Daten-Umordnungsvorrichtung zum Umordnen von Daten in jeder von einer Vielzahl von Datenseiten, von denen jede der Vielzahl von Seiten aus einer Vielzahl von Datenblöcken zusammengesetzt ist, und die Vorrichtung umfaßt:
einen Datenspeicher (10;27;31;35;47) mit einer Speicherkapazität zum Halten einer Datenseite zum zeitweiligen Speichern von Daten; und
mit dem Datenspeicher gekoppeltes Datenadreß-Erzeugermittel (11;28) um eine Folge von Adressen des Datenspeichers so zu erzeugen, daß die Daten in der aktuellen Seite in den Datenspeicher in einer ersten Reihenfolge eingeschrieben werden und die geschriebenen Daten aus dem Datenspeicher in einer zweiten Reihenfolge ausgelesen werden, die sich von der ersten Reihenfolge unterscheidet, um dadurch die Daten in der aktuellen Seite umzuordnen,
**dadurch gekennzeichnet**, daß der Datenspeicher (10;27;31; 35;47) in solcher Weise arbeitet, daß die Daten in einem Block in der aktuellen Seite von einem Abschnitt des Datenspeichers ausgelesen werden, der durch eine von dem Adreß-Erzeugermittel erzeugte aktuelle Adresse bezeichnet ist, und Daten in einem Block in einer nächsten Seite danach in den gleichen Abschnitt des Datenspeichers eingeschrieben werden, während eines Zeitraums, in dem der Abschnitt durch die von dem Datenadreß-Erzeugermittel erzeugte aktuelle Adresse adressiert wird, und
daß das Datenadreß-Erzeugermittel (11;28) die Abfolge der Adressen des Datenspeichers auf einer Grundlage Seite um Seite ändert.

2. Vorrichtung nach Anspruch 1, bei der das Datenadreß-Erzeugermittel (11;28) einen Adreßspeicher (33;38;49) enthält, um darin die Adressen des der aktuellen Seite entsprechenden Datenspeichers aufzuzeichnen, und ein mit dem Adreßspeicher gekoppeltes Adreß-Wandlermittel (34;39) zum Wandeln einer von einem Abschnitt des Adreßspeichers ausgelesenen Adresse durch eine vorgegebene Wandlerfunktion und zum Anwenden der gewandelten Adresse an den Datenspeicher und den Adreßspeicher, wobei der Adreßspeicher die gewandelte Adresse in dem gleichen Abschnitt des Adreßspeichers speichert, von welchem die Adresse gelesen wird.

3. Vorrichtung nach Anspruch 1, die weiter umfaßt Puffermittel (26;40;55) zum Anpassen der Zeitgabe von in den Datenspeicher eingegebenen Daten und aus dem Datenspeicher ausgegebenen Daten.

4. Vorrichtung nach Anspruch 1, bei der das Datenadreß-Erzeugermittel umfaßt:
einen Adreßspeicher (33;38;49), um darin Adressen des Datenspeichers so aufzuzeichnen, daß eine einen Bereich des Datenspeichers bezeichnende Adresse Bi, von welchem ein dort eingeschriebener Datenblock ausgelesen wurde, an einer Adresse i des Adreßspeichers aufgezeichnet wird, die an der Adresse i des Adreßspeichers aufgezeichnete Adresse Bi an den Datenspeicher angewendet wird zum Einschreiben eines i-ten Eingabedatenblockes in der aktuellen Seite in den durch die Adresse Bi bezeichneten Bereich des Datenspeichers; und mit dem Adreßspeicher gekoppeltes Adreß-Wandlermittel (34; 39) zum Wandeln der von dem Adreßspeicher ausgegebenen Adresse Bi in eine Adresse Ai, die ausgedrückt wird durch Ai=f(Bi), wobei f( ) eine vorgegebene Wandlerfunktion für Bi bezeichnet, wobei die Adresse Ai an dem Datenspeicher (31; 36) angewendet wird zum Auslesen eines in einen Bereich des Datenspeichers geschriebenen Datenblockes, der durch die Adresse Ai als ein i-ter Ausgabedatenblock in der aktuellen Seite bezeichnet ist.

5. Vorrichtung nach Anspruch 1, bei der die Adresse zusammengesetzt ist aus einer oberen Positionsadresse, welche einen Bereich für einen Datenblock bezeichnet, und einer unteren Positionsadresse, welche je einen Abschnitt für jeweilige Daten in dem Block innerhalb des Bereiches bezeichnet, und worin das Datenadreß-Erzeugermittel umfaßt:
Erzeugermittel (44) für untere Positionsadressen zum Erzeugen der unteren Positionsadresse;
einen Adreßspeicher (38), um darin obere Positionsadressen des Datenspeichers so aufzuzeichnen, daß eine einen Bereich des Datenspeichers (36), von welchem ein darin eingeschriebener Datenblock ausgelesen wurde, bezeichnende Adresse Bi an einer Adresse i des Adreßspeichers aufgezeichnet wird, die zusammen mit der durch das Adreß-Erzeugermittel (44) für untere Positionsadressen erzeugten unteren Positionsadresse an den Datenspeicher angewendet wird zum Einschreiben eines i-ten Eingabedatenblocks in die aktuelle Seite in den durch die Adresse Bi bezeichneten Bereich des Datenspeichers; und
mit dem Adreßspeicher (38) gekoppeltes Adreß-Wandlermittel zum Wandeln der von dem Adreßspeicher ausgegebenen Adresse Bi in eine Adresse Ai, welche ausgedrückt ist durch Ai=f(Bi), wobei f( ) eine vorgegebene Wandlerfunktion von Bi bezeichnet, wobei die Adresse Ai zusammen mit der durch das Adreß-Erzeugermittel (44) für untere Positionsadressen erzeugten unteren Positionsadresse an den Datenspeicher (56) angewendet wird zum Auslesen eines Datenblockes, der in einen Abschnitt des Datenspeichers eingeschrieben ist, welcher durch die Adresse Ai als ein i-ter Ausgabedatenblock in der aktuellen Seite bezeichnet ist.

6. Vorrichtung nach Anspruch 1, bei der die Vielzahl von Blöcken in der aktuellen Seite in eine Vielzahl von Blockgruppen klassifiziert wird,
worin das Datenadreß-Erzeugermittel eine Adresse des Datenspeichers (47) so erzeugt, daß die Daten in jeder der Vielzahl von Gruppen von Blöcken in der aktuellen Seite in den Datenspeicher in einer ersten Reihenfolge eingeschrieben werden und die geschriebenen Daten von dem Datenspeicher in einer zweiten Reihenfolge ausgelesen werden, die sich von der ersten Reihenfolge unterscheidet, um dadurch die Daten in jeder der Vielzahl von Gruppen von Blöcken in der aktuellen Seite umzuordnen,
worin das Datenadreß-Erzeugermittel umfaßt:
einen Adreßspeicher (49), um darin Adressen des Datenspeichers so aufzuzeichnen, daß eine einen Bereich des Datenspeichers, von dem ein darin eingeschriebener Datenblock ausgelesen worden ist, bezeichnende Adresse Bi in eine Adresse i des Adreßspeichers aufgezeichnet wird, wobei die an der Adresse i des Adreßspeichers aufgezeichnete Adresse Bi an den Datenspeicher (47) angewendet wird zum Einschreiben eines i-ten Eingabedatenblocks in die aktuelle Seite in den durch die Adresse Bi bezeichneten Bereich des Datenspeichers; und
eine Vielzahl von Adreß-Wandlermitteln (50-54), die jeweils mit dem Adreßspeicher gekoppelt sind zum Wandeln der von dem Adreßspeicher ausgegebenen Adresse Bi, worin, wenn der i-te Eingabedatenblock in der aktuellen Seite zu einer j-ten Gruppe von Blöcken unter der Vielzahl von Gruppen von Datenblöcken gehört, ein j-tes Adreß-Wandlermittel die Adresse Ai wandelt, welche ausgedrückt wird durch Ai= fj(Bi), wobei fj ( ) eine vorgegebene Wandlerfunktion für Bi bezeichnet, die von der j-ten Blockgruppe abhängt, und die Adresse Ai an den Datenspeicher (47) zum Auslesen eines Blockes von Daten angewendet wird, die in einen durch die Adresse Ai als ein i-ter Ausgabeblock von Daten in der aktuellen Seite bezeichneten Bereich eingeschrieben wurden.

7. Vorrichtung nach Anspruch 1, bei der die Vielzahl von Blöcken in der aktuellen Seite in eine Vielzahl von Gruppen von Blöcken klassifiziert ist,
worin das Datenadreß-Erzeugermittel eine Adresse des Datenspeichers (47) so erzeugt, daß die Daten in jeder der Vielzahl von Gruppen von Blöcken in der aktuellen Seite in den Datenspeicher (47) in einer ersten Reihenfolge eingeschrieben werden und die geschriebenen Daten von dem Datenspeicher in einer zweiten Reihenfolge ausgelesen werden, die von der ersten Reihenfolge verschieden ist, um dadurch die Daten in jeder der Vielzahl von Gruppen von Blöcken in der aktuellen Seite umzuordnen,
worin die Adresse zusammengesetzt ist aus einer oberen Positionsadresse, welche einen Bereich für einen Datenblock bezeichnet, und einer unteren Positionsadresse, welche einen Anteil jeweiliger Daten in dem Block innerhalb des Bereiches bezeichnet und
worin das Datenadreß-Erzeugermittel umfaßt:
Adreß-Erzeugermittel (44) für untere Positionsadressen zum Erzeugen der unteren Positionsadressen;
einen Adreßspeicher (49), um darin obere Positionsadressen des Datenspeichers (47) so aufzuzeichnen, daß eine Adresse Bi, welche einen Bereich des Datenspeichers bezeichnet, von welchem ein darin geschriebener Datenblock ausgelesen wurde, an einer Adresse i des Adreßspeichers aufgezeichnet ist, die zusammen mit der durch das Adreß-Erzeugermittel (44) für untere Positionsadressen erzeugten unteren Positionsadresse an den Datenspeicher angewendet wird zum Einschreiben eines i-ten Eingabedatenblocks in die aktuelle Seite in einen durch die Adresse Bi bezeichneten Bereich des Datenspeichers; und
eine Vielzahl von Adreß-Wandlermitteln (50-54), die jeweils mit dem Adreßspeicher (49) gekoppelt sind zum Wandeln der von dem Adreßspeicher ausgegebenen Adresse Bi, worin, wenn der i-te Eingabedatenblock in der aktuellen Seite zu einer j-ten Gruppe von Blöcken unter der Vielzahl von Datenblock-Gruppen gehört, ein j-tes Adreß-Wandlermittel die von dem Adreßspeicher ausgegebene Adresse Bi in eine Adresse Ai wandelt, die durch Ai=fj(Bi) ausgedrückt wird, wobei fj( ) eine vorgegebene Wandlerfunktion für Bi bezeichnet, die von der j-ten Gruppe von Blöcken abhängig ist, welche Adresse Ai an den Datenspeicher (47) angewendet wird zum Auslesen eines in einen Bereich des Datenspeichers eingeschriebenen Blockes, der durch die Adresse Ai als ein i-ter Ausgabeblock von Daten in der aktuellen Seite bezeichnet ist.

8. Vorrichtung nach Anspruch 1, bei der das Datenadreß-Erzeugermittel umfaßt:
einen ersten Adreßspeicher (15), um darin Adressen des Datenspeichers (10) zum Auslesen der gegenwärtigen Seite in dem Datenspeicher gespeicherter Daten aufzuzeichnen, wobei der erste Adreßspeicher auf eine extern gegebene Leseadresse (13; 14) reagiert durch Ausgeben einer in einem Bereich des ersten Adreßspeichers, der durch die extern gegebene Leseadresse bezeichnet ist, aufgezeichneten Adresse (21) an den Datenspeicher zum Auslesen eines in einem Bereich des Datenspeichers gespeicherten Datenblockes, der durch den Adreßspeicher bezeichnet ist, und darauffolgendes Einschreiben eines Datenblockes in einer nächsten Seite in den durch die von dem ersten Adreßspeicher ausgegebene Adresse bezeichneten Bereich des Datenspeichers; und
einen zweiten Adreßspeicher (16), um darin Adressen des Datenspeichers (10) zum Umordnen der Daten in der nächsten Seite aufzuzeichnen, wobei der zweite Adreßspeicher auf eine extern gegebene Schreibeadresse (13; 14) reagiert zum Aufzeichnen der von dem ersten Adreßspeicher ausgegebenen Adresse in einen durch die extern gegebene Schreibeadresse bezeichneten Bereich des zweiten Adreßspeichers (16); und worin Betätigungen des ersten und des zweiten Adreßspeichers (15; 16) abwechselnd auf Basis Seite um Seite gegeneinander ausgetauscht werden.

9. Vorrichtung nach einem der Ansprüche 1 bis 8, bei der vor jede Seite aus der Vielzahl von in die Vorrichtung eingegebenen Seiten ein Austastzeitraum gesetzt ist, und bei der die Daten in der aktuell in den Datenspeicher (10; 27; 31; 36; 47) eingeschriebenen Seite während des Austastzeitraums der nächsten Seite ausgelesen werden.

10. Vorrichtung nach einem der Ansprüche 1 bis 8, bei der die umzuordnenden Daten Daten eines Videosignals sind, und worin eine Zeitgabe zum Einschreiben der Daten in den Datenspeicher (10;27;31;36;47) mit einem Takt synchronisiert ist, der wiederum mit dem Horizontal-Synchronisationssignal des Videosignals synchronisiert ist, und eine Zeitgabe zum Auslesen der geschriebenen Daten aus dem Datenspeicher mit einem Taktsignal eines mit der Vorrichtung gekoppelten Datenprozessors synchronisiert ist.

11. Vorrichtung nach einem der Ansprüche 1 bis 8, bei der die umzuordnenden Daten Daten eines Videosignals sind, und worin eine Zeitgabe zum Einschreiben der Daten in den Datenspeicher (10;27;31;36;47) mit einem Taktsignal eines mit der Vorrichtung gekoppelten Datenprozessors synchronisiert ist und eine Zeitgabe zum Auslesen der eingeschriebenen Daten aus dem Datenspeicher mit einem Takt synchronisiert ist, der mit dem Horizontal-Synchronisationssignal des Videosignals synchronisiert ist.

## Revendications

1. Un dispositif de brassage de données pour brasser des données dans chaque page parmi un ensemble de pages de données, chacune des pages de l'ensemble de pages étant constituée par un ensemble de blocs de données, ce dispositif comprenant :
une mémoire de données (10; 27; 31; 35; 47) ayant une capacité d'enregistrement lui permettant de conserver une page de données pour enregistrer temporairement des données; et
des moyens de génération d'adresse de données (11; 28) connectés à la mémoire de données pour générer une séquence d'adresses de la mémoire de données, de façon que les données dans la page courant soient écrites dans la mémoire de données selon une première séquence, et les données écrites soient lues dans la mémoire de données selon une seconde séquence qui est différente de la première séquence, pour brasser ainsi les données dans la page courante,
caractérisé en ce que la mémoire de données (10; 27; 31; 35; 47) fonctionne d'une manière telle que des données dans un bloc dans la page courante soient lues dans une partie de la mémoire de données qui est indiquée par une adresse courante qui est générée par les moyens de génération d'adresse, et les données dans un bloc dans une page suivante soient ensuite écrites dans la même partie de la mémoire de données pendant un temps au cours duquel la partie précitée est adressée par l'adresse courante qui est générée par les moyens de génération d'adresse de données, et
en ce que les moyens de génération d'adresse de données (11; 28) changent la séquence des adresses de la mémoire de données, en procédant page par page.

2. Un dispositif selon la revendication 1, dans lequel les moyens de génération d'adresse de données (11; 28) comprennent une mémoire d'adresse (33; 38; 49) pour enregistrer à l'intérieur les adresses de la mémoire de données correspondant à la page courante, et des moyens de conversion d'adresse (34; 39) connectés à la mémoire d'adresse pour convertir, conformément à une fonction de conversion prédéterminée, une adresse qui est lue dans une partie de la mémoire d'adresse, et pour appliquer l'adresse convertie à la mémoire de données et à la mémoire d'adresse, la mémoire d'adresse enregistrant l'adresse convertie dans la partie de la mémoire d'adresse dans laquelle l'adresse est lue.

3. Un dispositif selon la revendication 2, comprenant en outre une mémoire tampon (26; 40; 55) pour faire concorder des caractéristiques temporelles de données qui sont appliquées à la mémoire de données et de données qui sont émises par la mémoire de données.

4. Un dispositif selon la revendication 1, dans lequel les moyens de génération d'adresse de données comprennent :
une mémoire d'adresse (33; 38; 49) pour enregistrer à l'intérieur des adresses de la mémoire de données, de façon qu'une adresse Bi indiquant une zone de la mémoire de données à partir de laquelle un bloc de données écrites à l'intérieur a été lu, est enregistrée dans une adresse i de la mémoire d'adresse, l'adresse Bi qui est enregistrée à l'adresse i de la mémoire d'adresse étant appliquée à la mémoire de données pour écrire un i-ième bloc de données d'entrée dans la page courante dans la zone de la mémoire de données qui est indiquée par l'adresse Bi; et
des moyens de conversion d'adresse (34; 39) connectés à la mémoire d'adresse pour convertir l'adresse Bi émise par la mémoire d'adresse en une adresse Ai qui est exprimée par Ai = f(Bi), en désignant par f( ) une fonction de conversion prédéterminée de Bi, l'adresse Ai étant appliquée à la mémoire de données (31; 36) pour lire un bloc de données qui est écrit dans une zone de la mémoire de données indiquée par l'adresse Ai, sous la forme d'un i-iéme bloc de données de sortie dans la page courante.

5. Un dispositif selon la revendication 1, dans lequel l'adresse est constituée par une adresse de position supérieure indiquant une zone pour un bloc de données et une adresse de position inférieure indiquant une partie pour chaque donnée dans le bloc à l'intérieur de la zone, et
dans lequel les moyens de génération d'adresse de données comprennent :
des moyens de génération d'adresse de position inférieure (44) pour générer l'adresse de position inférieure;
une mémoire d'adresse (38) pour enregistrer à l'intérieur des adresses de position supérieure de la mémoire de données. de façon qu'une adresse Bi indiquant une zone de la mémoire de données (36) à partir de laquelle un bloc de données écrites à l'intérieur a été lu, soit enregistrée dans une adresse i de la mémoire d'adresse et soit appliquée à la mémoire de données, conjointement à l'adresse de position inférieure qui est générée par les moyens de génération d'adresse de position inférieure (44), pour écrire un i-ième bloc de données d'entrée dans la page courante dans la zone de la mémoire de données qui est indiquée par l'adresse Bi; et
des moyens de conversion d'adresse connectés à la mémoire d'adresse (38) pour convertir l'adresse Bi qui est émise par la mémoire d'adresse en une adresse Ai qui est exprimée par Ai = f(Bi), en désignant par f( ) une fonction de conversion prédéterminée de Bi, l'adresse Ai étant appliquée à la mémoire de données (56), conjointement à l'adresse de position inférieure qui est générée par les moyens de génération d'adresse de position inférieure (44), pour lire un bloc de données qui est écrit dans une partie de la mémoire de données indiquée par l'adresse Ai, sous la forme d'un i-ième bloc de données de sortie dans la page courante.

6. Un dispositif selon la revendication 1, dans lequel l'ensemble de blocs dans la page courante est classé en un ensemble de groupes de blocs,
dans lequel les moyens de génération d'adresse de données génèrent une adresse de la mémoire de données (47) de façon que les données dans chaque groupe de l'ensemble de groupes de blocs dans la page courante soient écrites dans la mémoire de données selon une première séquence, et les données écrites soient lues dans la mémoire de données selon une seconde séquence qui est différente de la première séquence, pour brasser ainsi les données dans chacun des groupes de l'ensemble de groupes de blocs dans la page courante,
dans lequel les moyens de génération d'adresse de données comprennent :
une mémoire d'adresse (49) pour enregistrer à l'intérieur des adresses de la mémoire de données, de façon qu'une adresse Bi indiquant une zone de la mémoire de données à partir de laquelle un bloc de données écrites à l'intérieur a été lu soit enregistrée dans une adresse i de la mémoire d'adresse, l'adresse Bi qui est enregistrée à l'adresse i de la mémoire d'adresse étant appliquée à la mémoire de données (47) pour écrire un i-ième bloc de données d'entrée dans la page courante dans la zone de la mémoire de données qui est indiquée par l'adresse Bi; et
un ensemble de moyens de conversion d'adresse (50-54), chacun d'eux étant connecté à la mémoire d'adresse pour convertir l'adresse Bi émise par la mémoire d'adresse, dans lesquels, lorsque le i-ième bloc des données d'entrée dans la page courante appartient à un j-ième groupe de blocs parmi l'ensemble de groupes de blocs de données, un j-ième moyen de conversion d'adresse convertit l'adresse Ai qui est exprimée par Ai = fj(Bi), en désignant par fj( ) une fonction de conversion prédéterminée de Bi qui dépend du j-iéme groupe de blocs, l'adresse Ai étant appliquée à la mémoire de données (47) pour lire un bloc de données qui est écrit dans une zone de la mémoire de données indiquée par l'adresse Ai, sous la forme d'un i-ième bloc de données de sortie dans la page courante.

7. Un dispositif selon la revendication 1, dans lequel l'ensemble de blocs dans la page courante est classé en un ensemble de groupes de blocs,
dans lequel les moyens de génération d'adresse de données génèrent une adresse de la mémoire de données (47) de façon que les données dans chacun des groupes de l'ensemble de groupes de blocs dans la page courante soient écrites dans la mémoire de données (47) selon une première séquence, et les données écrites soient lues dans la mémoire de données selon une seconde séquence qui diffère de la première séquence, pour brasser ainsi les données dans chacun des groupes de l'ensemble de groupes de blocs dans la page courante,
dans lequel l'adresse est constituée par une adresse de position supérieure indiquant une zone pour un bloc de données, et une adresse de position inférieure indiquant une partie de chaque donnée dans le bloc à l'intérieur de la zone, et
dans lequel les moyens de génération d'adresse de données comprennent :
des moyens de génération d'adresse de position inférieure (44) pour générer l'adresse de position inférieure;
une mémoire d'adresse (49) pour enregistrer à l'intérieur des adresses de position supérieure de la mémoire de données (47), de façon qu'une adresse Bi indiquant une zone de la mémoire de données à partir de laquelle un bloc de données écrites à l'intérieur a été lu, soit enregistrée dans une adresse i de la mémoire d'adresse, l'adresse Bi qui est enregistrée à l'adresse i de la mémoire d'adresse étant appliquée à la mémoire de données, conjointement à l'adresse de position inférieure qui est générée par les moyens de génération d'adresse de position inférieure (44), pour écrire un i-ième bloc de données d'entrée dans la page courante dans la zone de la mémoire de données qui est indiquée par l'adresse Bi; et
un ensemble de moyens de conversion d'adresse (50-54), chacun d'eux étant connecté à la mémoire d'adresse (49) pour convertir l'adresse Bi qui est émise par la mémoire d'adresse, dans lesquels, lorsque le i-ième bloc des données d'entrée dans la page courante appartient à un j-ième groupe de blocs parmi l'ensemble de groupes de blocs de données, un j-ième moyen de conversion d'adresse convertit l'adresse Bi émise par la mémoire d'adresse en une adresse Ai qui est exprimée par Ai = fj(Bi), en désignant par fj( ) une fonction de conversion prédéterminée de Bi qui dépend du j-ième groupe de blocs, l'adresse Ai étant appliquée à la mémoire de données (47) pour lire un bloc de données écrit dans une zone de la mémoire de données qui est indiquée par l'adresse Ai, sous la forme d'un i-ième bloc de données de sortie dans la page courante.

8. Un dispositif selon la revendication 1, dans lequel les moyens de génération d'adresse de données comprennent :
une première mémoire d'adresse (15) pour enregistrer à l'intérieur des adresses de la mémoire de données (10), pour lire les données dans la page courante qui sont enregistrées dans la mémoire de données, la première mémoire d'adresse réagissant à une adresse de lecture (13; 14) fournie de façon externe, de façon à émettre vers la mémoire de données une adresse (21) enregistrée dans une zone de la première mémoire d'adresse qui est indiquée par l'adresse de lecture fournie de façon externe, pour lire un bloc de données enregistré dans une zone de la mémoire de données qui est indiquée par la mémoire d'adresse, et pour écrire ensuite un bloc de données dans une page suivante dans la zone de la mémoire de données qui est indiquée par l'adresse émise par la première mémoire d'adresse; et
une seconde mémoire d'adresse (16) pour enregistrer à l'intérieur des adresses de la mémoire de données (10), pour le brassage des données dans la page suivante, la seconde mémoire d'adresse réagissant à une adresse d'écriture (13; 14) fournie de façon externe en enregistrant l'adresse émise par la première mémoire d'adresse dans une zone de la seconde mémoire d'adresse (16) qui est indiquée par l'adresse d'écriture fournie de façon externe, et
dans lequel des opérations des première et seconde mémoires d'adresse (15; 16) sont commutées de façon mutuellement alternée, page par page.

9. Un dispositif selon l'une quelconque des revendications 1 à 8, dans lequel chaque page de l'ensemble de pages qui est appliquée en entrée du dispositif est précédée par un intervalle d'effacement, et dans lequel les données dans la page courante qui sont écrites dans la mémoire de données (10; 27, 31; 36; 47) sont lues pendant l'intervalle d'effacement de la page suivante.

10. Un dispositif selon l'une quelconque des revendications 1 à 8, dans lequel les données à brasser sont des données d'un signal vidéo, et dans lequel une condition temporelle pour l'écriture des données dans la mémoire de données (10; 27; 31; 36; 47) est synchronisée avec une horloge qui est synchronisée avec le signal de synchronisation horizontale du signal vidéo, et une condition temporelle pour lire les données écrites dans la mémoire de données est synchronisée avec un signal d'horloge d'un processeur de données qui est connecté au dispositif.

11. Un dispositif selon l'une quelconque des revendications 1 à 8, dans lequel les données à brasser sont des données d'un signal vidéo, et dans lequel une condition temporelle pour l'écriture des données dans la mémoire de données (10; 27; 31; 36; 47) est synchronisée avec un signal d'horloge d'un processeur de données qui est connecté au dispositif, et une condition temporelle pour la lecture des données écrites dans la mémoire de données est synchronisée avec une horloge qui est synchronisée avec le signal de synchronisation horizontale du signal vidéo.
